# EUROPEAN PATENT SPECIFICATION

(11) **EP 1 588 064 B1**
(45) Date of publication and mention of the grant of the patent: **29.11.2006**
(21) Application number: 04706202.1
(22) Date of filing: 29.01.2004
(51) Int. Cl.: F16C 13/00, D21G 1/02, D21F 3/08

(54) **TUBE ROLL FOR A PAPER MACHINE AND A METHOD FOR MANUFACTURING A TUBE ROLL**
ROHRROLLE FÜR EINE PAPIERMASCHINE UND VERFAHREN ZUR HERSTELLUNGEINER ROHRROLLE
ROULEAU TUBULAIRE POUR MACHINE DE FABRICATION DE PAPIER ET PROCEDE DE FABRICATION D'UN ROULEAU TUBULAIRE

(30) Priority: 29.01.2003 FI 20035007
(43) Date of publication of application: 26.10.2005
(73) Proprietor: Metso Paper, Inc., 00130 Helsinki (FI)
(72) Inventor: KURKINEN, Leo, FI-00670 HELSINKI (FI); VANNINEN, Rami, FI-04500 KELLOKOSKI (FI); LANNES, Petteri, FI-05400 JOKELA (FI); PITKÄNEN, Tatu, FI-04400 JÄRVENPÄÄ (FI); HOLOPAINEN, Kari, FI-40950 MUURAME (FI)
(74) Representative: TBK-Patent
(86) International application number: PCT/FI2004/050008
(87) International publication number: WO 2004/067978

(56) References cited:
- WO-A1-98/12440

## Description

This invention relates to a tube roll for a paper machine, which the tube roll includes
- a shell and roll heads at both of its ends for supporting the tube roll rotably to a paper machine,
- two cylinders in the shell, arranged coaxially at an interval to each other, and
- between the cylinders, a core construction attached to both cylinders. The invention also relates to a method for manufacturing a tube roll.

So-called tube rolls are used both in paper machines and board machines. A tube roll has a hollow interior and its shell is tubular. Compared to a solid roll, tube rolls are primarily used in nipless positions due to their lightweight but hollow construction. That is, tube rolls are separate without contacting another roll. Such positions include for example paper rolls and lead rolls as wells as extraction rolls in a calender. Roll heads are additionally mounted at the shell ends by means of which the tube roll is rotably supported to the paper machine. The shell thickness is several tens of millimeters and the shell is most commonly manufactured by casting. On the other hand, tube roll shells have also been manufactured by welding from a thick steel plate. In the tube rolls that form a nip with a counter roll, such as coating and surface sizing rolls, cast tube rolls with a wall thickness of approximately 50 mm have been exclusively used.

Irrespective of the manufacturing method, the shell of the known tube roll always requires machining. While a sufficient roundness can be obtained in the shell with machining, the vibration characteristics of the tube roll change as the thickness varies at different points of the shell. That is, the shell characteristics vary both in the peripherical and in the axial direction of the shell. The tube rolls are vibration-technically problematic also in other respects due to their hollow construction. In addition, the loadability of a tube roll is poor.

Attempts have been made to improve loadability by arranging two cylinders coaxially to form the tube roll shell. Such a tube roll is disclosed in the WO publication No. 98/12440. This tube roll has two conventional cylinders, however, having a different diameter, adapted within each other. Between the tubular cylinders there are additionally adapted elements that form a core construction for supporting the cylinders. In one embodiment the elements are formed of several hexagonal cells, set on top of each other, and made of sheet metal material. Instead, the cylinders comprised in the shell are conventional with a thickness of several tens of millimeters.

Manufacturing such a shell is increasingly demanding. In addition, machining and balancing of a tube roll is laborious. In spite of the improved loadability, the total weight of the tube roll increases due to the additional elements and the inner cylinder. Furthermore, the number of elements is substantial and adapting the elements between the cylinders is difficult. The manufacture is further complicated by the use of materials with a varying thickness.

The object of this invention is to provide a novel tube roll for a paper machine, which is lighter in weight, yet more rigid and having better loadability and vibration characteristics than heretofore. Another object of the invention is to provide a novel method for manufacturing a tube roll, which is faster and more efficient than heretofore and which can be used to manufacture tube rolls with varying characteristics. The characteristics of the tube roll according to this invention become evident from the appended claim 1. Correspondingly, the characteristics of the method according to this invention become evident from the appended claim 27. In the tube roll according to this invention, a material with essentially the same thickness can be used for both the cylinders and the core construction. At least the inner cylinder is made of sheet metal material. Unexpectedly the whole shell can be made of sheet metal material. This allows achieving a significant weight difference compared to conventional tube rolls. Also, the relation of the intrinsic mass of the tube roll to rigidity is better than heretofore. In addition, due to its construction and manufacturing method, the tube roll according to this invention is ready for use without machining. If required, a coating, which allows machining, is used to obtain desired tube roll surface characteristics. The roll head of the tube roll is also of a new construction utilizing axially symmetrical parts and sheet constructions. Furthermore, the core construction can be formed in many different ways and several different functions can be connected to the tube roll.

The invention is described below in detail by making reference to the enclosed drawings, which illustrate some of the embodiments of the invention, in which
- Figure 1a: is a cross-sectional view of the shell of the tube roll according to the invention,
- Figure 1b: is a partial enlarged view of the shell shown in Figure 1a,
- Figure 2a: is a partial sectional view of the tube roll according to the invention,
- Figure 2b: is a partial sectional view illustrating two alternate embodiments of the shell of the tube roll according to the invention,
- Figure 3: is a partial sectional view of the roll head of the tube roll according to the invention,
- Figure 4a: is an axonometric view of the tube roll according to the invention,
- Figure 4b: is a partial sectional view of Figure 4a,
- Figure 4c: is a sectional view of the core component shown in Figure 4b,
- Figure 5a: is a partial view of the pattern used in forming the core construction in Figure 5b,
- Figure 5b: shows another embodiment of the core construction according to the invention in a partially uncompleted state,
- Figure 5c: shows the completed core construction of Figure 5b,
- Figure 6a: shows a special embodiment of the tube roll according to the invention,
- Figure 6b: shows another special embodiment of the tube roll according to the invention,
- Figure 7a: shows two embodiments of the core construction for the tube roll according to the invention,
- Figure 7b: is an axonometric view of the material used for the manufacture of the core construction,
- Figure 8: illustrates various paper machine applications of the tube roll according to the invention.

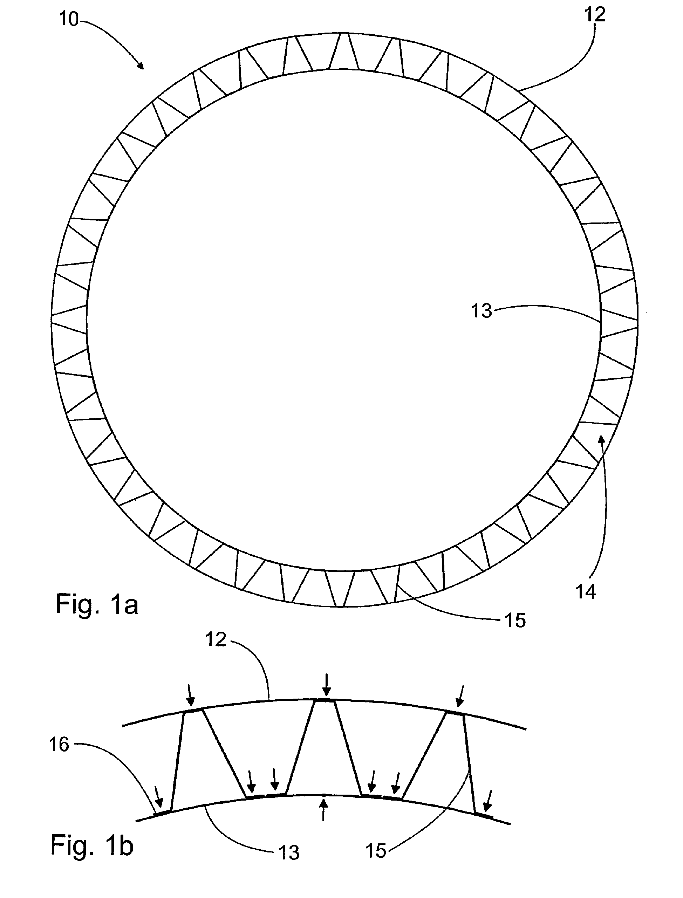

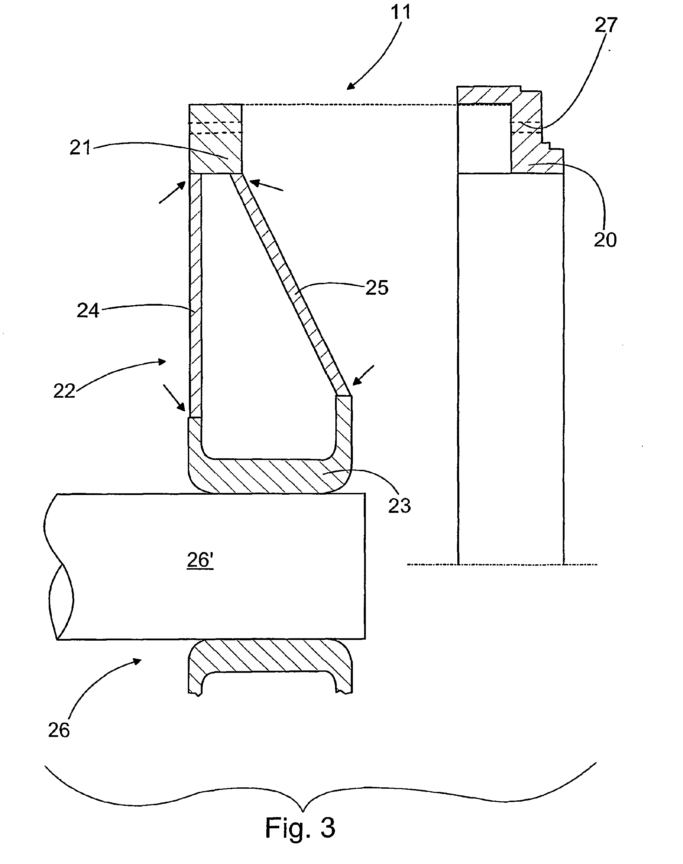

Figure 1 is a cross-sectional view of the shell 10 of the tube roll according to the invention. Tube rolls are generally designed for paper machines, but they can as well be used in board machines and other similar forming machines. The basic components of the tube roll comprise a shell 10 and roll heads 11 at both shell ends for supporting the tube roll rotably to the paper machine. One embodiment of the roll head 11 is shown in Figure 3. In addition, as shown in Figure 1, the shell 10 has two metal cylinders 12 and 13, adapted coaxially at an interval of each other. A core construction 14, located between the cylinders 12 and 13 and attached to both of the cylinders 12 and 13, is used for supporting the cylinders 12 and 13.

According to the invention, at least the inner cylinder is unexpectedly made of a sheet metal material having a thickness of 1 - 5 mm, more preferably 2 - 4 mm. In a tube roll that does not form a nip with the counter roll the outer cylinder is also preferably made of a sheet metal material having a thickness of 1 - 5 mm, preferably 2 - 4 mm. In a tube roll that is adapted to form a nip with the counter roll the outer cylinder is preferably made of a thicker sheet metal material having a thickness of for example 6 - 30 mm, preferably 10 - 20 mm. Such a construction provides a tube roll, which is significantly lighter in weight than heretofore, yet sufficiently rigid and loadable. In addition, the cylinders and the core construction are easily connectable to each other. The roll head 11 is also attached to both of the cylinders 12 and 13. Simultaneously it is also possible to provide a shell that is advantageous as regards loading and vibrations. Furthermore, the cylinders are closer to each other as compared to the known design. In this case, the shape of the cylinders and the entire shell remains as much as possible unchanged. Increasing the height of the core construction would basically increase the rigidity of the tube roll; however, the core construction would simultaneously require a more complicated design than proposed.

Generally the distance between the cylinders is 2 - 15%, more preferably 3 - 10% of the tube roll outer diameter. However, the distance is approximately 30 mm at the minimum and approximately 100 mm at the maximum. Consequently, according to the invention, for providing the core construction in the radial direction of the shell, one continuous core component is sufficient. It is understandable that in the peripherical direction of the shell 10, there can be several core components 15 as shown in Figure 1b. Manufacturing a higher core construction than proposed would be difficult and it would increase the material requirement as well as the tube roll weight. Each core component 15 is bent from a sheet metal material and attached both to the inner surface of the outer cylinder 12 and to the outer surface of the inner cylinder 13 for forming a cell structure. The proposed hat-like core component is advantageous as regards the attachment; however, other types of core components can also be used. In the proposed embodiment each core component is a separate hat-like sheet metal component. On the other hand, one suitably bent sheet metal component can comprise more than one core component.

To gain the benefits provided by the use of sheet metal, the manufacture must be accurate. Thus, according to the invention, both the cylinders and the core construction can be laser-cut and laser-welded sheet metal components. Laser cutting provides sheet metal components with high dimensional and profile accuracy, which are accurately bent to the required shape. Cutting and bending is facilitated by preferably using as sheet metal material cold rolled sheet with no residual stress. This ensures that the sheet metal components are kept straight during and after the cutting operation and the springback is small during bending. The accuracy obtained, in particular when bending the core components, influences the accuracy of the final tube roll. In addition, laser welding allows connecting the sheet metal components to each other without deformations. Laser welding is a type of welding in which no filler metal is used, and consequently the final tube roll will be free of the traditional seams. Therefore, after the welding the tube roll shell is ready without machining. To obtain a sufficient accuracy, appropriate welding jigs and turntables are used in laser welding. Figure 1b is a partial enlargement of the shell 10 illustrated in Figure 1a. The laser weld extending practically over the entire shell length is illustrated by the arrows. Production-technically, the core components 15 are first welded at their flanges 16 to the outer surface of the inner cylinder 13, and finally the outer cylinder 12 is welded to the top parts of the core components 15. In addition to the above, the cylinder can be made of a ready-made tube, for example. Furthermore, the material strength, especially in the tubes, can be higher than proposed. Besides or instead of the laser methods, other suitable methods can also be used.

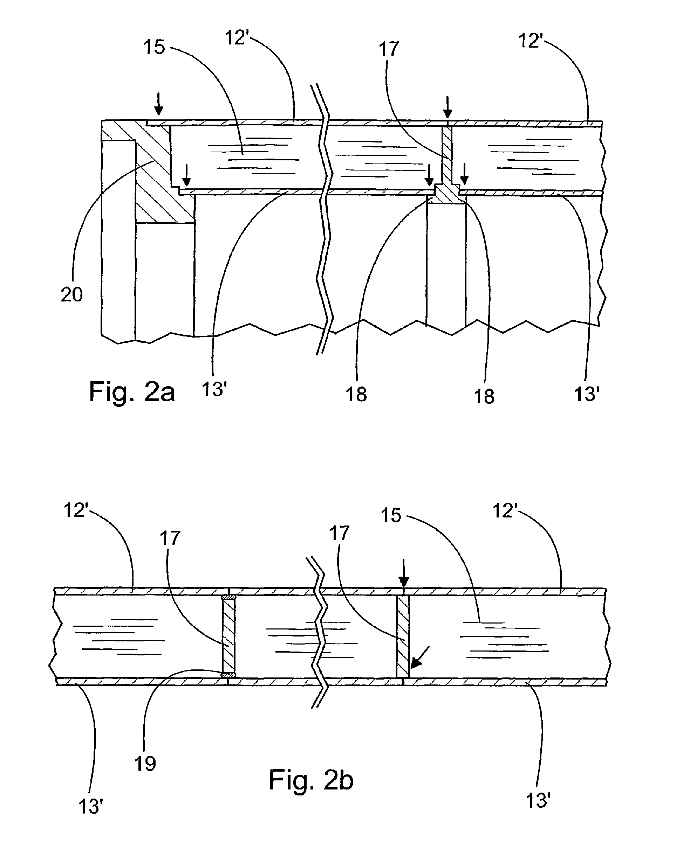

In the cross-sectional direction the cylinder is made of one sheet metal component, which is butt-welded as shown in Figure 1b. However, in the axial direction of the tube roll, each cylinder 12 and 13 is made of two or more cylindrical components 12' and 13'. This ensures that the manufacturing process remains sufficiently simple. The manufacture has been tested using 2000 mm long cylindrical components, and the results have been promising. Between the two cylinders, at the butted joint forming between the successive cylindrical components, there is additionally adapted a support component 17 according to the invention (Figure 2a). The support component 17 is an annular component, which has preferably suitable projections 18 for fastening the cylindrical components 13'. Figure 2a also shows one component 20 of the roll head, to which the cylindrical components 12' and 13' are attached preferably by welding at the points indicated by the arrows.

Figure 2b shows various applications of the support components 17. The support components 17 are here simple rings attached at the butted joint of the cylindrical components 12' and 13'. The support component 17 on the right in the figure is laser-welded using the method of the application presented above. Correspondingly, the support component 17 on the left is attached by gluing, providing thus an elastic joint 19 between the components. Elasticity efficiently dampens shell vibration. Composite rubber, for example, is used as elastic connection material. Furthermore, welding and gluing can be combined, if required. In addition, the use of simple support components is advantageous, as these affect the rigidity of the shell only slightly. On the other hand, the dimensioning of the support components can be used to vary the rigidity of the shell in the tube roll axial direction. Elastic joint also enables replacing the shell of the tube roll. The same reference numbers are used for functionally similar parts.

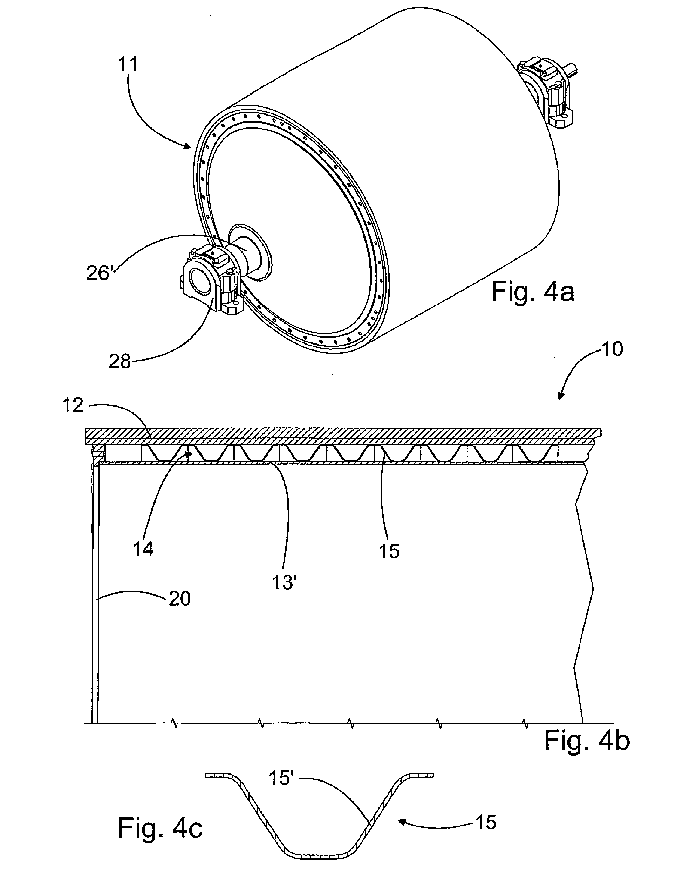

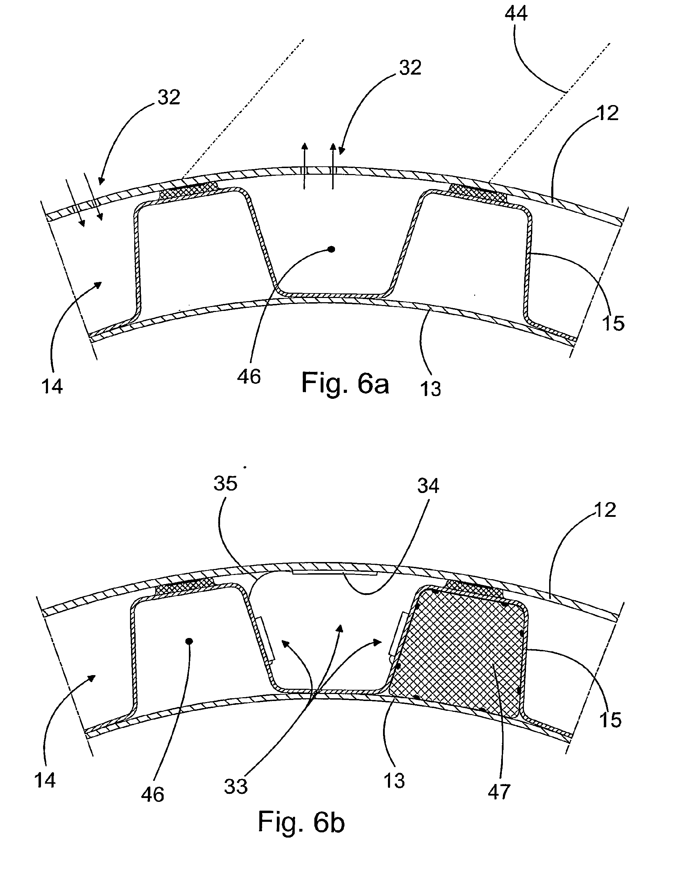

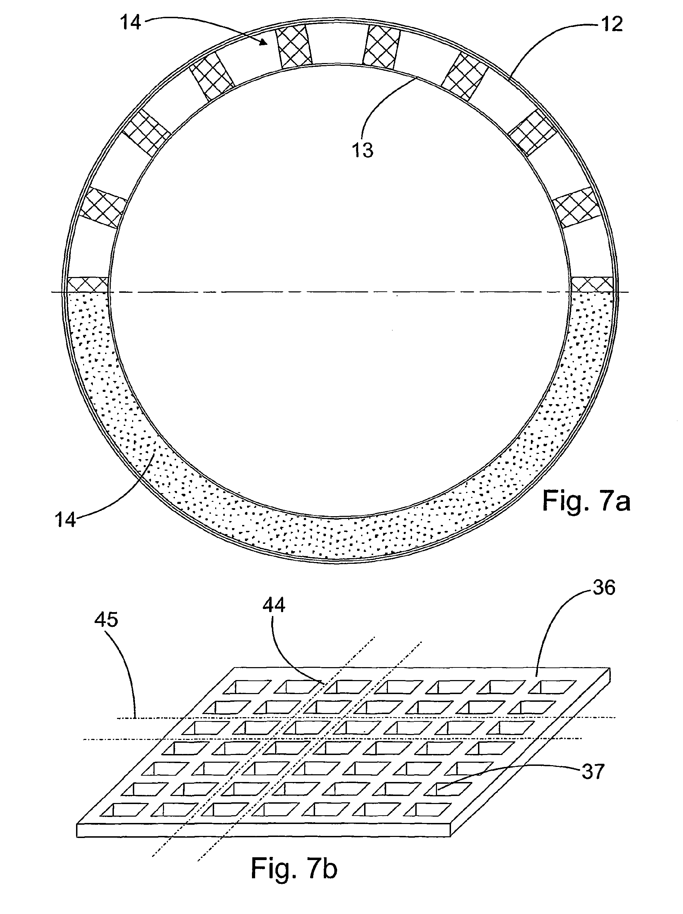

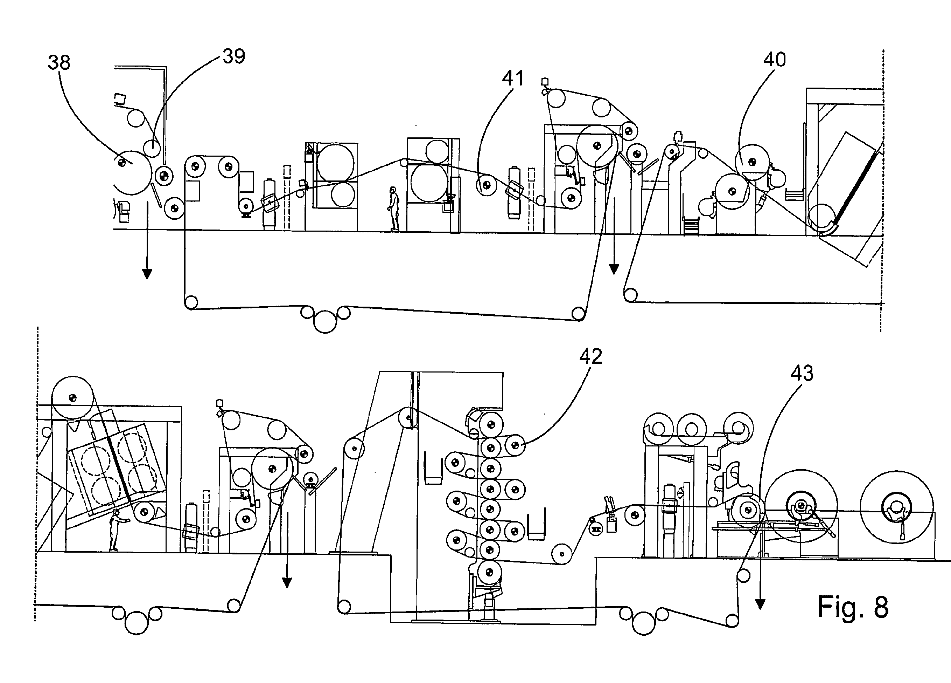

Figure 4a shows the tube roll according to the invention in a state ready for installation. A suitable bearing 28 in the projecting shaft 26' is adapted to the roll head 11. Figure 4b is a partial sectional view of the tube roll. Here the core components are located in the cross direction of the tube roll. Generally, according to the invention, the core construction is made of one or more core components, which are adapted either in the axial direction or in the cross direction of the tube roll. The core component is thus the component that extends continuously either over the entire axial length of the tube roll or over its peripherical length or over both of them. The simplest form of the core construction is one core component extending so as to cover the entire outer surface of the inner cylinder. The core construction can contact, for its entire surface, either one or both of the cylinders. However, it is more preferable that such contact points are only in a part of the inner and outer surface of the construction. This being the case, the contact points to the cylinders are continuous either in the peripherical direction or in the axial direction forming contact lines. These contact lines can face each other on the inner and outer surface of the construction or they can be in different positions, for example alternating. For the contact lines located in the peripherical direction, the term 'cross-directional core construction' is used, and correspondingly, for axial-direction contact lines, the term 'longitudinal core construction' is used. A cross-directional core construction provides the tube roll with peripherical rigidity, which is particularly advantageous as regards loading, and allows the use of the tube roll according to the invention also as a nip roll. In Figures 6a and 7b part of the contact lines is shown with dot-and-dash lines. The axial direction contact line of the tube roll is referred to with No. 44 and the peripherical direction contact line is referred to with No. 45. Contact lines in both directions are present, especially in the embodiment illustrated in Figure 7a. The applications of the tube roll according to the invention are described in greater detail in connection with Figure 8. Figure 4c is a cross-sectional view of one core component 15, which here is a hoop 15' made by cold roll-forming. The material strength of the hoop is 3 mm. The thickness of the outer cylinder 12 is 15 mm, whereas that of the inner cylinder 13 is 6 mm. The shell 10 also includes a urethane coating with a thickness of approximately 20 mm. This tube roll can be used for example in coating or surface sizing equipment.

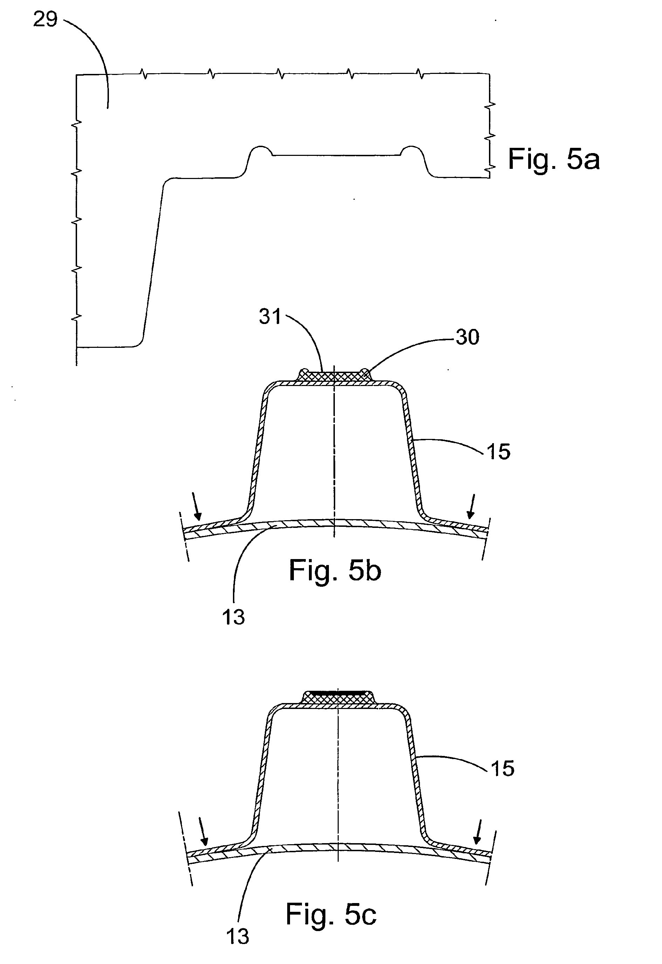

Figure 5b shows one core component 15 according to the invention, which is first welded to the inner cylinder 13. In this application the attachment of the outer cylinder is made by gluing. Preferably, a one-component polyurethane based adhesive and sealing composition is used. This composition hardens by the air moisture forming a high-quality elastomer with good corrosion resistance and dampening characteristics. The joint is also very durable. Using the method according to the invention, the roll heads and the inner cylinder are first connected by welding. Then the bent sheet metal component forming the core construction is mounted around the inner cylinder and attached by welding. The welding points are indicated by the arrows in Figures 5b and 5c. The components of the core construction facing the outer cylinder are pretreated and the composition is applied using the pattern 29 shown in Figure 5a. As the result, an accurately shaped strip 30, having a thickness of a few millimeters, is provided. The strip is allowed to dry, after which a thin layer of fresh composition is applied in the groove 31 formed on its front surface (Figure 5c). Prior to mounting the outer cylinder, its inner surface is pretreated for ensuring the adhesion. Finally the outer cylinder is stretched in place and attached to the roll heads by welding. If required, the roll heads are straightened by machining and the tube roll is coated. Once the composition is dry, the tube roll is otherwise ready for use.

Figure 3 shows the roll head 11 comprising, according to the invention, two annular components 20 and 21 detachably connected to each other. The said cylindrical components 12' and 13' are attached to the first annular component 20 as shown in Figure 2a. Similarly, in the second annular component 21, there are elements 22 for attaching the tube roll rotably to the paper machine. Due to the first annular component the shell can be made round and can be attached to machining equipment for coating, for example. Here the elements 22 comprise an annular component 23, which is arranged to the said second annular component 21 in a coaxial manner using the sheet components 24 and 25 for forming a box-type structure. Here, too, the components are attached to each other by welding at the points indicated by the arrows. The box-type structure is advantageously light in weight, yet rigid. In addition, the size of the components to be machined is much smaller than that of a conventional roll head. The annular component 23 also comprises a connection unit 26 for attaching the hollow shaft to the paper machine. Here the connection unit 26 is a protruding shaft 26', which is attached to the annular component 23 by means of a shrink fit. For attaching the hollow shaft to the paper machine, a suitable bearing is arranged in the protruding shaft 26' (not shown). The proposed roll head is rigid and requires only little space in the axial direction of the tube roll.

The first annular component can also be used for the balancing of the shell. The above-mentioned annular components 20 and 21 are fastened to each other with bolts (not shown). The first annular component 20 is provided with threaded holes 27 for the bolts. In practice, there are intentionally more threaded holes than bolts. This allows installing additional bolts in the unused threaded holes for balancing the shell, if required. The above described construction enables changing the shell only while maintaining the existing roll heads. This allows setting the tube roll characteristics as desired simply by changing the shell.

While the shell according to the invention is ready for use without machining, the application position may require the tube roll to have certain characteristics. For example, a coating can be arranged on the outer surface of the outer cylinder, and the coating can be machined, if required. On the other hand, a thin-wall shell has a good heat transfer capability. This enables adjusting the tube roll temperature as desired by conducting a suitable media into the hollow shaft and even into the shell interior. Consequently, the tube roll according to the invention can be used even as a dryer cylinder. Furthermore, the shell can be provided with holes, which facilitates, for example, the tail transfer at the reel drum as the air exits to within the shell.

At least part of the area of the outer cylinder 12 can have a perforation 32 for providing an airflow connection through the cell structure to the tube roll environment or from the tube roll environment to the cell structure. Figure 6a shows an example of a blow and suction system integrated to the cell structure. By utilizing the cell structure, a blow or suction can be provided, when required, only in a part of the cell. This enables a local suction of the paper web for example during tail threading, or correspondingly, the detachment from the tube roll at a desired point. Airflows are illustrated with arrows in Figure 6a. In practice, a single tube roll is provided with either a blow or suction, however, both of these can be arranged at different points of the same tube roll. Perforating a sheet metal material is easy and especially when using the laser-cutting method, the holes will be accurately defined. At the same time, the shape and position of the holes can be selected with significantly more freedom than conventionally.

In practice, the above described tube roll can be used as a reel spool, for example, with an integrated zone-controlled blow or suction. The blow and suction can be delimited in the machine direction for example within one or more cells 46 remaining between the core construction 15 and the outer cylinder 12. It is easy to produce a very efficient suction or blow at one single cell compared to a situation in which suction or a blow should be provided over the entire shell area. On the other hand, the blow or suction can also be cross-directionally limited at a certain zone with paper machine cross-directional cells. This construction enables, for example, integrating an actively controlled suction zone to the tube roll for tail threading. On the other hand, the blow can be used for example for providing detaching doctoring or a change blow exclusively at a certain desired point in the machine or cross direction. Generally, savings in the vacuum or air consumption are remarkable, because the blow or the suction is arranged in only those positions where it is required. The distribution of vacuum or air to the desired cell structures takes place through the tube roll head construction (not shown). The tube roll can also include a pressure measurement for measuring pressure levels and other related parameters as well as their profiles.

Other types of media flows can also be arranged in the cells forming in the core construction for heating or cooling the tube roll for example with a liquid or a gas. This is applicable primarily for coating roll or dryer roll applications. For example, the durability of a coating roll can be improved by cooling the roll.

The core construction can include other functions, too. According to the invention, the outer cylinder, inner cylinder and/or core construction is provided with sensor elements for measuring the tube roll stress. Figure 6b shows two application examples of the sensor elements. In the first embodiment, the inner surface of the outer cylinder 12 of the tube roll is provided with strain gauges 34. The strain gauges can be used to determine the easily influencing force based on the deformations of the core construction and shell made of a sheet metal material. Besides strain gauges, an EMFi diaphragm can be used, which, when installed directly under a traditional roll coating, would not resist the curing heat of a rubber coating. On the other hand, the measuring sensor can be a traditional pressure sensor or similar.

In Figure 6b the sensor elements 33 are arranged in the core component 15. For a single sensor, the force can be calculated by taking into account the core construction angle. On the other hand, the effect of the angle is eliminated by summing up the forces of the different flanks of the core construction. The measurement also provides the shearing force in the tangential direction of the tube roll. Strain gauges can be used to directly measure the nip load, for example, in connection with coating, reeling or winding, for example. On the other hand, the tension of the web or a fabric is easy to measure for example at the dryers and lead rolls. The proposed construction provides versatile measurements in a simple manner, which would be impossible in a conventional tube roll. In addition, the measurements provide condition monitoring during the use of the cell-construction tube rolls as well as a measurement of their predicted lifetime. The sensor elements 33 are connected with compatible leads 35 to a telemetry device, for example, which is used to transfer the measurement results also from a rotating tube roll (not shown).

The rigidity of a tube roll, and especially of one having a longitudinal core construction, can also be increased by filling the cells or only part of the cells with a suitable rigidity-providing material. For example, a stiffener profile could be used, which is made of carbon fibers with strength exceeding 200 GPa by means of pultrusion, which provides a high axial rigidity. The shape of the stiffener profile 47 preferably corresponds accurately with that of the cell 46 so as to allow each of its surfaces to attach as accurately as possible to the inner surfaces of the cell 46, i.e. to the core construction 14. Unlike in Figure 6b, the stiffener profile can also be hollow. Once the joint between the stiffener profile and the core construction is as perfect as possible, the stiffener profile will bear the forces directed to the tube roll. The stiffener profile preferably has ready-made grooves or similar for the adhesive agent as well as the required means, nodules, crowns or similar for positioning the stiffener profile in place. The adhesive agent conducted to the grooves is shown shaded in Figure 6b. The adhesion is best carried out when the tube roll is in a vertical position, permitting thus the application of the adhesive agent to the groove with pressure, preferably from downwards to upwards. Using stiffener profiles it is easy to vary the rigidity of the tube roll by selecting a suitable amount of stiffener profiles for installation in the tube roll while taking into account its dynamic characteristics. For the tube roll to rotate without vibrations, the stiffener profiles must be located in the shell symmetrically with respect to the tube roll center. Thus the number of cells in the tube roll must be divisible by for example two or four or another even number, so that the stiffener profiles can be located within every second or every fourth cell, for instance. Stiffener profiles, which are adapted at too long intervals, however, have the disadvantage that the differences in the moment of inertia in the shell periphery can grow excessive and provide an excitation for vibrations during the tube roll rotation.

The diameter of one tube roll tested was 800 mm and the distance between the cylinders was 50 mm. The outer cylinder was made of sheet metal with a thickness of 4 mm. The thickness of the inner cylinder and the core components was 2 mm. The total weight of this tube roll, having a length of approximately 7800 mm, was 1700 kg, which is only a half of that of a conventional tube roll provided with a cast shell. In addition, the lowest specific frequency of the tube roll increased in this case by 5 Hz. Figure 1a shows a cross-sectional view of this tube roll comprising 36 core components.

Besides the above-described sheet metal, the core construction can be made of metal foam or an elastic composition. In practice, expanded metal is cast between the cylinders or a component made of metal foam is glued, for example, between the cylinders. The use of metal foam provides an extremely load-bearing, yet lightweight, core construction, which simultaneously provides efficient dampening. In addition, the cylinder sizes are freely selectable and casting, in particular, is a simple manufacturing method. Due to certain metal foam characteristics the tube roll can be made as desired without weight or vibration problems. Aluminum foam, for example, is a suitable material due to its lightness and corrosion resistance. This is illustrated in Figure 7a, in which the bottom part of the tube roll cross-section is made of metal foam. The use of metal foam also remarkably increases the loadability of the tube roll. Within the metal foam, it is also possible to adapt for example stiffener strips made of carbon fiber, which can be used to further stiffen the shell. The tube roll shown in Figure 7a is additionally provided with a coating.

The upper part of the cross section in Figure 7a is correspondingly made of an elastic composition. In practice, the core construction is formed for example of a polyurethane mat 36, in which openings 37 are cut at suitable intervals (Figure 7b). This allows keeping the tube roll mass small, and the elastic composition is subjected to slight variations, which in particular effectively dampens the vibrations. When using an elastic mat, the mat is glued to between the cylinders. For rubber, also curing can be used. The size and shape of the openings can be used to adjust the dampening characteristics as desired.

The tube roll according to the invention is composed of two thin cylinders connected with a core construction. This type of tube roll weighs only about a third compared to a traditional roll. At the same time, the manufacturing costs are clearly lower. The tube roll is especially suitable for example as paper and lead rolls in the dryer section, nip roll in the coater, or reel spool at the reel or winder. Thus the tube roll can also be used as a nip roll, for which moderate nip loads are applied.

An example of a tube roll suitable to be used as a nip roll is a construction, in which the outer cylinder was made of a 15 mm thick sheet material and the inner cylinder, having a 50 mm smaller diameter, was made of a 4 mm thick sheet metal material. The inner cylinder was attached to the roll heads by welding. The core construction was formed of a sheet metal material having a thickness of 3 mm as a wave-like structure, and it was adapted cross-directionally on top of the inner cylinder as shown in Figure 6a. The outer cylinder was adapted on top of the core construction by gluing and attached to the head constructions by welding. Finally, the tube roll having an outer diameter of 1500 mm was coated with XMateX coating. The tube roll thus provided, shown in Figure 4a, is dimensioned suitable for a nip load of 75 kN/m. This makes it suitable for use as the roll of the surface coating equipment, for example. Figure 8 shows other examples of tube roll applications. The tube roll according to the invention can be used for example as a dryer cylinder 38, lead roll 39, or coating roll 40. Both of the rolls of surface sizing equipment or coating equipment, having a nip contact with each other, can be tube rolls according to the invention. The tube roll can also be used as a paper roll 41, extraction roll 42 for the calender as well as a reel drum 43 for the reel and winder. The rigidity characteristics of the tube rolls according to the invention are sufficient for resisting loading, applied due to the fabric tension or the nip contact with another roll at a linear load of below 100 kN/m.

The tube roll according to the invention is significantly lighter in weight than heretofore. In addition, the two cylinders and the core construction located close to each other provide a rigid shell, which additionally has good loadability. This allows using the tube roll according to the invention even as a nip roll. Furthermore, the construction can efficiently dampen vibrations, making the tube roll according to the invention stable during the use. The small diameter of the tube roll also reduces the power requirement. Furthermore, the tube roll is easy to install and service due to the new roll head construction. In addition, such a construction eliminates the half-critical vibration allowing to safely manufacture tube rolls that are smaller than heretofore. On the other hand, by using sheet-construction cylinders, restrictions that were earlier set by the production technology are avoided without weight problems. This allows manufacturing large rolls, too. In addition, the tube roll is very corrosion resistant and various functions can be connected to it.

## Claims

1. Tube roll for paper machine, which tube roll includes
- a shell (10) and roll heads (11) at both shell ends for supporting the tube roll rotably to the paper machine,
- two cylinders (12, 13) in the shell (10), arranged coaxially at an interval to each other, and
- between the cylinders (12, 13), a core construction (14) attached to both of the cylinders (12, 13),
**characterized in that** each roll head (11) is attached to both of the cylinders (12, 13), of which at least the inner cylinder (13) is made of a sheet metal material.

2. Tube roll according to claim 1, **characterized in that** the outer cylinder (12) is also made of a sheet metal material.

3. Tube roll according to claim 1 or 2, **characterized in that** the thickness of the sheet metal material is 1 - 5 mm, more preferably 2 - 4 mm.

4. Tube roll according to any of the claims 1 - 3, **characterized in that** the thickness of the outer cylinder (12) is higher than that of the inner cylinder (13).

5. Tube roll according to any of the claims 1 - 4, **characterized in that** the distance between the cylinders (12, 13) is 2 - 15%, more preferably 3 - 10% of the outer diameter of the tube roll, this distance being, however, within a range of 30 - 100 mm.

6. Tube roll according to any of the claims 1 - 5, **characterized in that** the core construction (14) is composed of one or more core components (15).

7. Tube roll according to claim 6, **characterized in that** the core construction (14) is composed of one or more core components (15) adapted either in the axial or cross direction of the tube roll.

8. Tube roll according to claim 6 or 7, **characterized in that** the core construction (14) is composed of one continuous core component (15).

9. Tube roll according to claim 8, **characterized in that** the core component (15) is made of a sheet metal material, which is attached both to the inner surface of the outer cylinder (12) and to the outer surface of the inner cylinder (13) for forming a cell structure.

10. Tube roll according to claim 9, **characterized in that** a stiffener profile (47), preferably of a carbon fiber construction, is integrated to the core component (15).

11. Tube roll according to claim 8, **characterized in that** the core component (15) is an elastic mat (36).

12. Tube roll according to any of the claims 1 - 10, **characterized in that** both the cylinders (12, 13) and the core construction (14) are laser-cut and laser-welded sheet metal components.

13. Tube roll according to any of the claims 1 - 10, **characterized in that** in the axial direction of the tube roll both of the cylinders (12, 13) are composed of two or more cylindrical components (12', 13'), and at the butted joint therebetween and between the cylinders (12, 13) there is a support component (17), to which the cylindrical components (12', 13') are attached.

14. Tube roll according to claim 13, **characterized in that** between the cylindrical components (12', 13') and the support component (17) there is a laser weld or elastic joint (19), made of elastic connection material, such as composite rubber.

15. Tube roll according to any of the claims 1 - 10, **characterized in that** the sheet metal material is cold rolled sheet with no residual stress.

16. Tube roll according to any of the claims 1 - 6, **characterized in that** the core construction (14) is composed of metal foam or elastic composition.

17. Tube roll according to any of the claims 1 - 16, **characterized in that** the roll head (11) includes two annular components (20, 21), detachably connectable to each other, with the said cylinders (12, 13) being attached to the first annular component (20) while the second annular component (21) is provided with elements (22) for attaching the tube roll rotably to the paper machine.

18. Tube roll according to claim 17, **characterized in that** the elements (22) comprise an annular component (23), which is coaxially arranged to the said second annular component (21) using sheet components (24, 25) for forming a box-type structure, and which has a connection unit (26) for attaching a hollow shaft to the paper machine.

19. Tube roll according to any of the claims 1 - 18, **characterized in that** there is a coating on the outer surface of the outer cylinder (12).

20. Tube roll according to claim 9, **characterized in that** at least part of the area of the outer cylinder (12) has a perforation (32) for providing an airflow connection through the cell structure to the tube roll environment or from the tube roll environment to the cell structure.

21. Tube roll according to claim 9, **characterized in that** the cell structure includes several cells (50), in which there is a media flow for heating or cooling the tube roll.

22. Tube roll according to any of the claims 1 - 21, **characterized in that** in the outer cylinder (12), the inner cylinder (13) and/or the core construction (14) there are arranged sensor elements (33) for measuring the tube roll stress.

23. Tube roll according to any of the claims 1 - 22, **characterized in that** the tube roll is a guide roll, lead roll or an extraction roll (39, 41, 42) of a paper machine.

24. Tube roll according to any of the claims 1 - 22, **characterized in that** the tube roll is a surface sizing or coating equipment roll (40) of a paper machine.

25. Tube roll according to any of the claims 1 - 22, **characterized in that** the tube roll is a reel spool (43) of a paper machine.

26. Tube roll according to any of the claims 1 - 22, **characterized in that** the tube roll is a dryer cylinder (38) of a paper machine.

27. Method for manufacturing a tube roll, the tube roll comprising roll heads (11) and a shell (10) with a core construction (14) between two coaxially arranged cylinders (12, 13), **characterized in that**
- roll heads (11) are manufactured,
- the outer cylinder (12) is manufactured of a metal material,
- the inner cylinder (13) is manufactured of a sheet metal material, and
- the core construction is manufactured, after which
- the core construction (14) is arranged on top of the inner cylinder (13), and
- the core construction (14) and the inner cylinder (13) are attached to each other, and preceding or following these stages the inner cylinder (13) and the roll heads (11) are attached to each other,
after which the outer cylinder (12) is arranged on top of the core construction (14) and attached both to the core construction (14) and to the roll heads (11).

28. Method according to claim 27, **characterized in that** the tube roll is coated.

29. Method according to claim 27 or 28, **characterized in that** the mutual contact surfaces of the outer surface of the core construction (14) and/or the inner surface of the outer cylinder (12) are pretreated prior to connecting them to each other.

30. Method according to any of the claims 27 - 29, **characterized in that** the core construction (14) and the cylinders (12, 13) are attached by welding.

31. Method according to any of the claims 27 - 30, **characterized in that** the roll heads (11) and the cylinders (12, 13) are attached by welding.

32. Method according to any of the claims 27 - 31, **characterized in that** the cylinders (12, 13) are made of two or more cylindrical components (12', 13') connected to each other with a butt weld.

33. Method according to claim 32, **characterized in that** a support component (17) is adapted at the butt weld between the cylindrical components (12', 13').

34. Method according to any of the claims 27 - 33, **characterized in that** laser welding is used in welding.

35. Method according to any of the claims 27 - 29, **characterized in that** the core construction (14) and the cylinders (12, 13) are connected by gluing.

## Patentansprüche

1. Röhrenwalze für eine Papiermaschine, wobei die Röhrenwalze folgendes aufweist:
- einen Mantel (10) und Walzenköpfe (11) an beiden Mantelenden zum drehbaren Stützen der Röhrenwalze an der Papiermaschine,
- zwei Zylinder (12, 13) in dem Mantel (10), die koaxial bei einem Abstand zueinander angeordnet sind, und
- zwischen den Zylindern (12, 13) einen Kernaufbau (14), der an beiden Zylindern (12, 13) angebracht ist,
**dadurch gekennzeichnet, dass**
jeder Walzenkopf (11) an beiden Zylindern (12, 13) angebracht ist, von denen zumindest der innere Zylinder (13) aus einem Blechmaterial hergestellt ist.

2. Röhrenwalze gemäß Anspruch 1,
**dadurch gekennzeichnet, dass**
der äußere Zylinder (12) ebenfalls aus einem Blechmaterial hergestellt ist.

3. Röhrenwalze gemäß Anspruch 1 oder 2,
**dadurch gekennzeichnet, dass**
die Dicke von dem Blechmaterial 1 bis 5 mm beträgt, wobei 2 bis 4 mm noch eher bevorzugt werden.

4. Röhrenwalze gemäß einem der Ansprüche 1 bis 3,
**dadurch gekennzeichnet, dass**
die Dicke von dem äußeren Zylinder (12) größer als diejenige von dem inneren Zylinder (13) ist.

5. Röhrenwalze gemäß einem der Ansprüche 1 bis 4,
**dadurch gekennzeichnet, dass**
der Abstand zwischen den Zylindern (12, 13) 2 bis 15%,
wobei 3 bis 10% noch eher bevorzugt wird, von dem Außendurchmesser der Röhrenwalze beträgt, wobei dieser Abstand jedoch innerhalb eines Bereichs von 10 bis 100 mm ist.

6. Röhrenwalze gemäß einem der Ansprüche 1 bis 5,
**dadurch gekennzeichnet, dass**
der Kernaufbau (14) aus einer oder mehreren Kernkomponenten (15) besteht.

7. Röhrenwalze gemäß Anspruch 6,
**dadurch gekennzeichnet, dass**
der Kernaufbau (14) aus einer oder mehreren Kernkomponenten (15) besteht, die entweder in der axialen Richtung oder in der Querrichtung der Röhrenwalze angepasst sind.

8. Röhrenwalze gemäß Anspruch 6 oder 7,
**dadurch gekennzeichnet, dass**
der Kernaufbau (14) aus einer ununterbrochenen Kernkomponente (15) besteht.

9. Röhrenwalze gemäß Anspruch 8,
**dadurch gekennzeichnet, dass**
die Kernkomponente (15) aus einem Blechmaterial hergestellt ist, wobei sie an der Innenfläche des äußeren Zylinders (12) und an der Außenfläche des inneren Zylinders (13) zum Ausbilden einer Zellenstruktur angebracht ist.

10. Röhrenwalze gemäß Anspruch 9,
**dadurch gekennzeichnet, dass**
ein Versteifungsprofil (47) vorzugsweise aus einem Kohlenstofffaseraufbau mit der Kernkomponente (15) integriert ist.

11. Röhrenwalze gemäß Anspruch 8,
**dadurch gekennzeichnet, dass**
die Kernkomponente (15) eine elastische Matte (36) ist.

12. Röhrenwalze gemäß einem der Ansprüche 1 bis 10,
**dadurch gekennzeichnet, dass**
sowohl die Zylinder (12, 13) als auch der Kernaufbau (14) per Laser geschnittene und per Laser geschweißte Blechkomponenten sind.

13. Röhrenwalze gemäß einem der Ansprüche 1 bis 10,
**dadurch gekennzeichnet, dass**
in der axialen Richtung der Röhrenwalze beide Zylinder (12, 13) aus zwei oder mehr zylindrischen Komponenten (12', 13') bestehen, und an der Stoßverbindung zwischen ihnen und zwischen den Zylindern (12, 13) eine Stützkomponente (17) vorhanden ist, an der die zylindrischen Komponenten (12', 13') angebracht sind.

14. Röhrenwalze gemäß Anspruch 13,
**dadurch gekennzeichnet, dass**
zwischen den zylindrischen Komponenten (12', 13') und der Stützkomponente (17) eine per Laser geschweißte oder elastische Verbindung (19) vorhanden ist, die aus einem elastischen Verbindungsmaterial, wie bspw. ein Verbundgummi, hergestellt ist.

15. Röhrenwalze gemäß einem der Ansprüche 1 bis 10,
**dadurch gekennzeichnet, dass**
das Blechmaterial kaltgewalztes Blech ohne Restspannung ist.

16. Röhrenwalze gemäß einem der Ansprüche 1 bis 6,
**dadurch gekennzeichnet, dass**
der Kernaufbau (14) aus Metallschaum oder einer elastischen Zusammensetzung besteht.

17. Röhrenwalze gemäß einem der Ansprüche 1 bis 16,
**dadurch gekennzeichnet, dass**
der Walzenkopf (11) zwei ringartige Komponenten (20, 21) hat, die miteinander lösbar verbindbar sind, wobei die Zylinder (12, 13) an der ersten ringartigen Komponente (20) angebracht sind, während die zweite ringartige Komponente (21) mit Elementen (22) versehen ist für ein drehbares Befestigen der Röhrenwalze an der Papiermaschine.

18. Röhrenwalze gemäß Anspruch 17,
**dadurch gekennzeichnet, dass**
die Elemente (22) eine ringartige Komponente (23) aufweisen, die koaxial an der zweiten ringartigen Komponente (21) unter Verwendung von Blechkomponenten (24, 25) zum Ausbilden eines kastenartigen Aufbaus angeordnet sind, und wobei sie eine Verbindungseinheit (26) zum Befestigen einer hohlen Welle an der Papiermaschine hat.

19. Röhrenwalze gemäß einem der Ansprüche 1 bis 18,
**dadurch gekennzeichnet, dass**
eine Beschichtung an der Außenfläche des äußeren Zylinders (12) vorhanden ist.

20. Röhrenwalze gemäß Anspruch 9,
**dadurch gekennzeichnet, dass**
zumindest ein Teil des Bereichs des äußeren Zylinders (12) eine Perforation (32) zum Vorsehen einer Luftströmungsverbindung durch die Zellenstruktur zu der Röhrenwalzenumgebung oder von der Röhrenwalzenumgebung zu der Zellenstruktur hat.

21. Röhrenwalze gemäß Anspruch 9,
**dadurch gekennzeichnet, dass**
die Zellenstruktur mehrere Zellen (50) aufweist, in denen eine Mediumströmung zum Erwärmen oder Kühlen der Röhrenwalze vorhanden ist.

22. Röhrenwalze gemäß einem der Ansprüche 1 bis 21,
**dadurch gekennzeichnet, dass**
in dem äußeren Zylinder (12), dem inneren Zylinder (13) und / oder dem Kernaufbau (14) Sensorelemente (33) zum Messen der Röhrenwalzenspannung angeordnet sind.

23. Röhrenwalze gemäß einem der Ansprüche 1 bis 22,
**dadurch gekennzeichnet, dass**
die Röhrenwalze eine Führungswalze, eine Leitwalze oder eine Extrahierwalze (39, 41, 42) einer Papiermaschine ist.

24. Röhrenwalze gemäß einem der Ansprüche 1 bis 22,
**dadurch gekennzeichnet, dass**
die Röhrenwalze eine Oberflächenleimauftraganlagenwalze oder Beschichtungsanlagenwalze (40) einer Papiermaschine ist.

25. Röhrenwalze gemäß einem der Ansprüche 1 bis 22,
**dadurch gekennzeichnet, dass**
die Röhrenwalze eine Aufrollspule (43) einer Papiermaschine ist.

26. Röhrenwalze gemäß einem der Ansprüche 1 bis 22,
**dadurch gekennzeichnet, dass**
die Röhrenwalze ein Trocknerzylinder (38) einer Papiermaschine ist.

27. Verfahren zum Herstellen einer Röhrenwalze, wobei die Röhrenwalze Röhrenköpfe (11) und einen Mantel (10) mit einem Kernaufbau (14) zwischen zwei koaxial angeordneten Zylindern (12, 13) aufweist,
**dadurch gekennzeichnet, dass**
- die Walzenköpfe (11) hergestellt werden,
- der äußere Zylinder (12) aus einem Metallmaterial hergestellt wird,
- der innere Zylinder (13) aus einem Blechmaterial hergestellt wird, und
- der Kernaufbau hergestellt wird, wobei danach
- der Kernaufbau (14) an der Oberseite des inneren Zylinders (13) angeordnet wird, und
- der Kernaufbau (14) und der innere Zylinder (13) aneinander befestigt werden, und vor oder nach diesen Stufen der innere Zylinder (13) und die Walzeköpfe (11) aneinander angebracht werden,
wobei danach der äußere Zylinder (12) an der Oberseite des Kernaufbaus (14) angeordnet wird und sowohl an dem Kernaufbau (14) als auch an den Walzenköpfen (11) befestigt wird.

28. Verfahren gemäß Anspruch 27,
**dadurch gekennzeichnet, dass**
die Röhrenwalze beschichtet wird.

29. Verfahren gemäß Anspruch 27 oder 28,
**dadurch gekennzeichnet, dass**
die gemeinsamen Kontaktflächen von der Außenfläche des Kernaufbaus (14) und / oder der Innenfläche des äußeren Zylinders (12) vorbehandelt werden, bevor sie miteinander verbunden werden.

30. Verfahren gemäß einem der Ansprüche 27 bis 29,
**dadurch gekennzeichnet, dass**
der Kernaufbau (14) und die Zylinder (12, 13) durch ein Schweißen befestigt werden.

31. Verfahren gemäß einem der Ansprüche 27 bis 30,
**dadurch gekennzeichnet, dass**
die Walzenköpfe (11) und die Zylinder (12, 13) durch ein Schweißen befestigt werden.

32. Verfahren gemäß einem der Ansprüche 27 bis 31,
**dadurch gekennzeichnet, dass**
die Zylinder (12, 13) aus zwei oder mehr zylindrischen Komponenten (12', 13') hergestellt werden, die miteinander durch eine Stoßschweißnaht verbunden werden.

33. Verfahren gemäß Anspruch 32,
**dadurch gekennzeichnet, dass**
eine Stützkomponente (17) bei dem Stoßschweißen zwischen den zylindrischen Komponenten (12', 13') angewendet wird.

34. Verfahren gemäß einem der Ansprüche 27 bis 33,
**dadurch gekennzeichnet, dass**
ein Laserschweißen beim Schweißen angewendet wird.

35. Verfahren gemäß einem der Ansprüche 27 bis 29,
**dadurch gekennzeichnet, dass**
der Kernaufbau (14) und die Zylinder (12, 13) durch ein Kleben verbunden werden.

## Revendications

1. Rouleau tubulaire pour machine à papier, lequel rouleau tubulaire inclut
une coque (10) et des têtes de rouleau (11) aux deux extrémités de la coque pour soutenir le rouleau tubulaire de façon rotative à la machine à papier,
deux cylindres (12, 13) dans la coque (10), agencés de façon coaxiale à un intervalle l'un de l'autre, et
entre les cylindres (12, 13), une construction centrale (14) attachée aux deux cylindres (12, 13),
**caractérisé en ce que** chaque tête de rouleau (11) est attachée aux deux cylindres (12, 13), desquels au moins le cylindre intérieur (13) est fait d'un matériau en tôle.

2. Rouleau tubulaire selon la revendication 1, **caractérisé en ce que** le cylindre extérieur (12) est également fait d'un matériau en tôle.

3. Rouleau tubulaire selon la revendication 1 ou 2, **caractérisé en ce que** l'épaisseur du matériau en tôle est 1-5 mm, plus préférablement 2-4 m.

4. Rouleau tubulaire selon l'une quelconque des revendications 1-3, **caractérisé en ce que** l'épaisseur du cylindre extérieur (12) est plus élevée que celle du cylindre intérieur (13).

5. Rouleau tubulaire selon l'une quelconque des revendications 1-4, **caractérisé en ce que** la distance entre les cylindres (12, 13) est 2-15%, plus préférablement 3-10% du diamètre extérieur du rouleau tubulaire, cette distance étant, toutefois, dans une gamme de 30-100 mm.

6. Rouleau tubulaire selon l'une quelconque des revendications 1-5, **caractérisé en ce que** la construction centrale (14) est composée d'un ou plusieurs composants centraux (15).

7. Rouleau tubulaire selon la revendication 6, **caractérisé en ce que** la construction centrale (14) est composée d'un ou plusieurs composants centraux (15) adaptés soit dans la direction axiale ou la direction transverse du rouleau tubulaire.

8. Rouleau tubulaire selon la revendication 6 ou 7, **caractérisé en ce que** la construction centrale (14) est composée d'un composant central continu (15).

9. Rouleau tubulaire selon la revendication 8, **caractérisé en ce que** le composant central (15) est fait d'un matériau en tôle, qui est attaché à la fois à la surface intérieure du cylindre extérieur (12) et à la surface extérieure du cylindre intérieur (13) pour former une structure cellulaire.

10. Rouleau tubulaire selon la revendication 9, **caractérisé en ce que** un profilé raidisseur (47), préférablement d'une construction en fibre de carbone, est intégré au composant central (15).

11. Rouleau tubulaire selon la revendication 8, **caractérisé en ce que** le composant central (15) est un tapis élastique (36).

12. Rouleau tubulaire selon l'une quelconque des revendications 1-10, **caractérisé en ce que** à la fois les cylindres (12, 13) et la construction centrale (14) sont des composants en tôle coupés au laser et soudés au laser.

13. Rouleau tubulaire selon l'une quelconque des revendications 1-10, **caractérisé en ce que** dans la direction axiale du rouleau tubulaire les deux cylindres (12, 13) sont tous deux composés de deux composés cylindriques (12', 13') ou plus, et au joint bout à bout entre eux et entre les cylindres (12, 13) il y a un composant de soutien (17), auquel les composants cylindriques (12', 13') sont attachés.

14. Rouleau tubulaire selon la revendication 13, **caractérisé en ce que** entre les composants cylindriques (12', 13') et le composant de soutien (17) il y a une soudure laser ou un joint élastique (19), fait d'un matériau de liaison élastique, tel que du caoutchouc composite.

15. Rouleau tubulaire selon l'une quelconque des revendications 1-10, **caractérisé en ce que** le matériau en tôle est une tôle laminée à froid sans aucune contrainte résiduelle.

16. Rouleau tubulaire selon l'une quelconque des revendications 1-6, **caractérisé en ce que** la construction centrale (14) est composée de mousse métallique ou composition élastique.

17. Rouleau tubulaire selon l'une quelconque des revendications 1-16, **caractérisé en ce que** la tête de rouleau (11) inclut deux composants annulaires (20, 21), qui peuvent être reliés l'un à l'autre de manière détachable, avec lesdits cylindres (12, 13) étant attachés au premier composant annulaire (20) tandis que le deuxième composant annulaire (21) est fourni avec des éléments (22) pour attacher le rouleau tubulaire à la machine à papier de manière rotative.

18. Rouleau tubulaire selon la revendication 17, **caractérisé en ce que** les éléments (22) comprennent un composant annulaire (23), qui est agencé de manière coaxiale au dit deuxième composant annulaire (21) en utilisant des composants en tôle (24, 25) pour former une structure du type boîte, et qui a une unité de liaison (26) pour attacher un arbre creux à la machine à papier.

19. Rouleau tubulaire selon l'une quelconque des revendications 1-18, **caractérisé en ce qu'**il y a un revêtement sur la surface extérieure du cylindre extérieur (12).

20. Rouleau tubulaire selon la revendication 9, **caractérisé en ce que** au moins une partie de la superficie du cylindre extérieur (12) a une perforation (32) pour pourvoir une liaison d'écoulement d'air à travers la structure cellulaire à l'environnement du rouleau tubulaire ou depuis l'environnement du rouleau tubulaire à la structure cellulaire.

21. Rouleau tubulaire selon la revendication 9, **caractérisé en ce que** la structure cellulaire inclut plusieurs cellules (50), dans lesquelles il y a un flux de média pour chauffer ou refroidir le rouleau tubulaire.

22. Rouleau tubulaire selon l'une quelconque des revendications 1-21, **caractérisé en ce que** dans le cylindre extérieur (12), le cylindre intérieur (13) et/ou la construction centrale (14) sont agencés des éléments capteurs (33) pour mesurer la contrainte du rouleau tubulaire.

23. Rouleau tubulaire selon l'une quelconque des revendications 1-22, **caractérisé en ce** le rouleau tubulaire est un rouleau de guidage, un rouleau d'attaque ou un rouleau d'extraction (39, 41, 42) d'une machine à papier.

24. Rouleau tubulaire selon l'une quelconque des revendications 1-22, **caractérisé en ce que** le rouleau tubulaire est un rouleau d'équipement de collage ou revêtement de surface (40) d'une machine à papier.

25. Rouleau tubulaire selon l'une quelconque des revendications 1-22, **caractérisé en ce que** le rouleau tubulaire est une bobine enrouleuse (43) d'une machine à papier.

26. Rouleau tubulaire selon l'une quelconque des revendications 1-22, **caractérisé en ce que** le rouleau tubulaire est un cylindre séchoir (38) d'une machine à papier.

27. Procédé de fabrication d'un rouleau tubulaire, le rouleau tubulaire comprenant des têtes de rouleau (11) et une coque (10) avec une construction centrale (14) entre deux cylindres agencés de manière coaxiale (12, 13), **caractérisé en ce que**
des têtes de rouleau (11) sont fabriquées,
le cylindre extérieur (12) est fabriqué en un matériau métallique
le cylindre intérieur (13) est fabriqué en un matériau en tôle, et
la construction centrale est fabriquée, après quoi
la construction centrale (14) est agencée sur le cylindre intérieur (13), et
la construction centrale 814) et le cylindre intérieur (13) sont attachés l'une à l'autre, et avant ou après ces étapes le cylindre intérieur (13) et les têtes de rouleau (11) sont attachés les uns aux autres,
après quoi le cylindre extérieur (12) est agencé en haut de la construction centrale (14) et attaché à la fois à la construction centrale (14) et aux têtes de rouleau (11).

28. Procédé selon la revendication 27, **caractérisé en ce que** le rouleau tubulaire est revêtu.

29. Procédé selon la revendication 27 ou 28, **caractérisé en ce que** les surfaces de contact mutuelles de la surface extérieure de la construction centrale (14) et/ou la surface intérieure du cylindre extérieur (12) sont prétraitées avant d'être reliées ensemble.

30. Procédé selon l'une quelconque des revendications 27-29, **caractérisé en ce que** la construction centrale (14) et les cylindres (12, 13) sont attachés par soudage.

31. Procédé selon l'une quelconque des revendications 27-30, **caractérisé en ce que** les têtes de rouleau (11) et les cylindres (12, 13) sont attachés par soudage.

32. Procédé selon l'une quelconque des revendications 27-31, **caractérisé en ce que** les cylindres (12, 13) sont faits de deux composants cylindriques (12', 13') ou plus reliés les uns aux autres par une soudure bout à bout.

33. Procédé selon la revendication 32, **caractérisé en ce que** un composant de soutien (17) est adapté au niveau de la soudure bout à bout entre les composants cylindriques (12', 13').

34. Procédé selon l'une quelconque des revendications 27-33, **caractérisé en ce que** un soudage laser est utilisé pour le soudage.

35. Procédé selon l'une quelconque des revendications 27-29, **caractérisé en ce que** la construction centrale (14) et les cylindres (12, 13) sont reliés par collage.
